# DEMANDE DE BREVET EUROPEEN

(11) **EP 3 840 182 A1**
(43) Date de publication de la demande: **23.06.2021**
(21) Numéro de dépôt: 20209139.3
(22) Date de dépôt: 23.11.2020
(51) Int. Cl.: H02K 1/27, H02K 21/14, H02K 29/03

(54) **MACHINE ÉLECTRIQUE TOURNANTE AYANT UN RATIO DE DIMENSIONS MINIMISANT LE BRUIT**

(30) Priorité: 19.12.2019 FR 1915022
(71) Demandeur: VALEO EQUIPEMENTS ELECTRIQUES MOTEUR, 94046 Créteil Cedex (FR)
(72) Inventeur: ANDRIAMALALA, Rijaniaina Njakasoa, 94046 CRETEIL CEDEX (FR); RAKOTOVAO, Mamy, 94046 CRETEIL CEDEX (FR); DUARTE, Johnny, 94046 CRETEIL CEDEX (FR)
(74) Mandataire: Saadi, Florian

(57) **Abrégé**

L'invention concerne un rotor (11) de machine électrique, notamment pour véhicule automobile, ayant un axe de rotation (X), un rayon rotorique (Rᵣ), un pas polaire (τ) et comportant :
- un corps (31) comprenant une pluralité dents rotoriques (40) définissant des cavités (36) dans lesquelles sont logés des aimants permanents (37), chaque dent rotorique (40) comportant une unique lèvre (41) de retenue radiale d'un aimant permanent, et
- un ensemble de pôles magnétiques (50), chaque pôle présentant une courbure en arc de cercle, ledit arc de cercle étant défini par un rayon de courbure (R_{c}), un centre de courbure (C_{c}) et un angle polaire (2αₚ),
ledit rotor présentant un ratio (r) entre le rayon de courbure (R_{c}) et le rayon rotorique (Rᵣ) compris entre 0,52 et 0,63 et un ratio (α) entre le demi-angle polaire (αₚ) et le pas polaire (τ) compris entre 0,62 et 0,80.

## Description

La présente invention porte sur un rotor de machine électrique tournante mono-lèvre utilisé notamment dans les véhicules automobiles. Elle porte également sur une machine électrique tournante comprenant le rotor de la présente invention.

L'invention trouve une application particulièrement avantageuse, mais non exclusive, avec les machines électriques de forte puissance pouvant fonctionner en mode alternateur et en mode moteur.

De façon connue en soi, les machines électriques tournantes comportent un stator et rotor solidaire d'un arbre. Le rotor pourra être solidaire d'un arbre menant et/ou mené et pourra appartenir à une machine électrique tournante sous la forme d'un alternateur, d'un moteur électrique, ou d'une machine réversible pouvant fonctionner dans les deux modes.

Le stator est monté dans un carter configuré pour porter à rotation l'arbre par exemple par l'intermédiaire de roulements. Le stator comporte un corps muni d'une pluralité de dents définissant des d'encoches, et un bobinage inséré dans les encoches du stator.

Le bobinage est obtenu par exemple à partir de fils continus recouverts d'émail ou à partir d'éléments conducteurs en forme d'épingles reliées entre elles par soudage. Alternativement, les phases de la machine sont formées à partir de bobines individuelles enroulées chacune autour d'une dent statorique. Les phases connectées en étoile ou en triangle comportent des sorties reliées à un module électrique de commande. Par ailleurs, le rotor comporte un corps formé par un empilage de feuilles de tôles maintenues sous forme de paquet au moyen d'un système de fixation adapté. Le rotor comporte des pôles formés par exemple par des aimants permanents logés dans des cavités délimitées chacune par deux dents rotoriques adjacentes.

Un certain nombre de machine de l'art antérieur, telle que les machines synchrones à aimants permanents, présente des performances optimales telles que le couple et le rendement mais également un problème de bruit. Plusieurs travaux ont essayé par des moyens diversifiés de réduire le bruit par exemple en optimisant la forme géométrique de chaque dent statorique, en travaillant sur la forme de la roue polaire ou sur l'algorithme de commande.

L'invention vise à proposer une définition optimale du rotor afin de réduire les bruits d'origine électromagnétique de la machine sans dégrader les performances.

A cet effet, l'invention a pour objet un rotor de machine électrique, notamment pour véhicule automobile, ayant un axe de rotation, un rayon rotorique, un pas polaire et comportant :
- un corps comprenant une pluralité dents rotoriques définissant des cavités dans lesquelles sont logés des aimants permanents, chaque dent rotorique comportant une unique lèvre de retenue radiale d'un aimant permanent, et
- un ensemble de pôles magnétiques, chaque pôle présentant une courbure en arc de cercle, ledit arc de cercle étant défini par un rayon de courbure, un centre de courbure et un angle polaire,
dans lequel le rotor présente un ratio entre le rayon de courbure et le rayon rotorique compris entre 0,52 et 0,63 et un ratio entre le demi-angle polaire et le pas polaire compris entre 0,62 et 0,80.

La définition d'un tel ratio permet d'obtenir un compromis optimum entre le couple fourni par la machine et le niveau d'ondulation en couple correspondant. L'invention permet ainsi d'améliorer les performances magnétiques et acoustiques de la machine électrique tournante comprenant un tel rotor. En effet, le rayon de courbure du pôle magnétique et l'angle polaire sont les deux paramètres géométriques influant le plus les performances de la machine électrique.

Par ailleurs, chaque dent rotorique comportant une unique lèvre de retenue radiale d'un aimant permanent permet ainsi, en supprimant une des lèvres de maintien, de réduire les fuites magnétiques entre les pôles du rotor. On améliore ainsi les performances magnétiques du rotor, ce qui autorise à réduire la masse d'aimant permanents utilisée afin de faire des économies de coût de revient de la machine.

Dans le cadre de la présente invention, on définit le « pas polaire » comme étant égal à 360° divisé par le nombre de pôle. Par « arc de cercle » on entend désigner l'arc du cercle osculateur du pôle. Le centre de ce cercle est appelé centre de courbure de la courbe au point M et son rayon, le rayon de courbure.

Dans la description et les revendications, on utilisera les termes "externe" et "interne" ainsi que les orientations "axiale" et "radiale" pour désigner, selon les définitions données dans la description, des éléments du rotor, du stator et/ou de la machine électrique. Par convention, l'orientation "radiale" est dirigée orthogonalement à l'orientation axiale. L'orientation axiale se rapporte, suivant le contexte, à l'axe de rotation du rotor, du stator et/ou de la machine électrique. L'orientation "circonférentielle" est dirigée orthogonalement à la direction axiale et orthogonalement à la direction radiale. Les termes "externe" et "interne" sont utilisés pour définir la position relative d'un élément par rapport à un autre, par rapport à l'axe de référence, un élément proche de l'axe est ainsi qualifié d'interne par opposition à un élément externe situé radialement en périphérie.

D'autre part, tout intervalle de valeurs désigné par l'expression « entre a et b » signifie le domaine de valeurs allant de a jusqu'à b (c'est-à-dire incluant les bornes strictes a et b).

Le rayon de courbure et le rayon rotorique s'expriment en millimètres [mm] et le demi-angle polaire et le pas polaire s'expriment en degrés [°].

Selon d'autres modes de réalisations avantageux, un tel rotor peut présenter une ou plusieurs caractéristiques seules ou en combinaison.

Selon un mode de réalisation, le rotor présente un ratio entre le rayon de courbure et le rayon rotorique compris entre 0,54 et 0,61 et un ratio entre le demi-angle polaire et le pas polaire compris entre 0,64 et 0,78. Ce ratio permet de réduire de manière encore plus efficace les ondulations de couple tout en conservant un niveau largement satisfaisant du couple moyen fourni par la machine comprenant le rotor de la présente invention. Le terme « compris » signifiant que les bornes des intervalles sont inclues dans l'intervalle.

Selon un mode de réalisation, chaque dent rotorique comporte une surface radialement externe, ladite surface étant définie par ledit arc de cercle de centre de courbure et deux extrémités, une des deux extrémités comprenant ladite lèvre.

Selon un mode de réalisation, les deux extrémités d'une surface radialement externe d'une dent rotorique présentent une courbure différente de la courbure de l'arc de cercle de centre de courbure de cette même surface. En d'autres termes, les deux extrémités, une des deux extrémités comprenant la lèvre, ne s'inscrivent pas dans le cercle de courbure définissant l'arc de cercle de chaque pôle magnétique.

En variante, les deux extrémités d'une surface radialement externe d'une dent rotorique s'inscrivent dans le cercle de courbure définissant l'arc de cercle de chaque pôle magnétique. Les extrémités et l'arc de cercle de chaque pôle présente ainsi une même courbure.

Selon un mode de réalisation, les deux extrémités d'une même surface radialement externe d'une dent rotorique sont asymétriques. Cette asymétrie (également appelée dissymétrie) permet de réduire de manière encore plus efficace les ondulations de couple tout en conservant un niveau largement satisfaisant du couple moyen fourni par la machine comprenant le rotor de la présente invention.

En variante, les deux extrémités d'une même surface radialement externe d'une dent rotorique sont symétriques.

Selon un mode de réalisation, le rotor est de type à concentration de flux.

Selon un mode de réalisation, le rotor comporte des laminettes rapportées montées chacune entre une lève et une périphérie externe d'un aimant permanent correspondant.

Selon un mode de réalisation, les aimants permanents sont réalisés en terre rare.

Selon un mode de réalisation, le rotor est formé par un paquet de tôles.

Selon un mode de réalisation, le rotor comprend une âme munie d'une ouverture centrale pour le passage d'un arbre, lesdits dents rotoriques étant connectées à ladite âme par une de leurs extrémités.

Selon un autre aspect, l'invention concerne une machine électrique tournante comportant un rotor tel que précédemment défini.

L'invention sera mieux comprise à la lecture de la description qui suit et à l'examen des figures qui l'accompagnent. Ces figures ne sont données qu'à titre illustratif mais nullement limitatif de l'invention.

[Fig. 1] représente une vue en coupe transversale de la machine électrique tournante selon la présente invention.

[Fig. 2] représente une vue détaillée en coupe transversale d'un rotor selon un premier mode de réalisation.

[Fig. 3] représente une vue détaillée en coupe transversale d'un rotor selon un deuxième mode de réalisation.

Les éléments identiques, similaires ou analogues conservent la même référence d'une figure à l'autre.

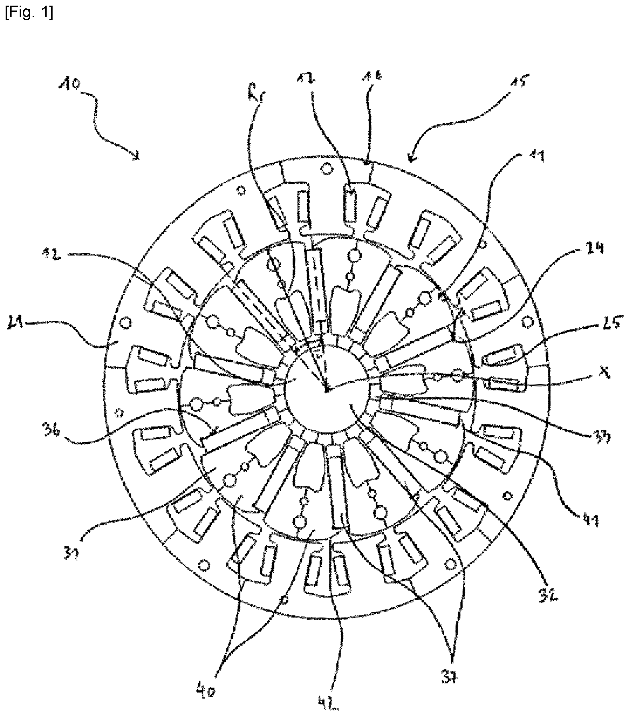

La figure 1 montre une machine électrique tournante 10 comportant un rotor 11 ayant un axe de rotation X, un rayon rotorique Rr, un pas polaire τ et destiné à être monté sur un arbre 12. Un stator bobiné 15, qui pourra être polyphasé, entoure le rotor 11 avec présence d'un entrefer entre la périphérie externe du rotor 11 et la périphérie interne du stator 15. Ce stator 15 est fixé sur un carter configuré pour porter à rotation l'arbre 12 via des roulements à billes et/ou à aiguilles.

Plus précisément, le stator 15 comporte un corps 16 et un bobinage 17. Le corps de stator 16 consiste en un empilement axial de tôles planes. Le corps 16 comporte des dents statoriques 20, réparties angulairement de manière régulière sur une périphérie interne d'une culasse 21. Ces dents 20 délimitent des encoches 24, de telle façon que chaque encoche 24 est délimitée par deux dents 20 successives. La culasse 21 correspond ainsi à la portion annulaire externe pleine du corps 16 qui s'étend entre le fond des encoches 24 et la périphérie externe du stator 15.

Les encoches 24 débouchent axialement dans les faces d'extrémité axiales du corps 16. Les encoches 24 sont également ouvertes radialement vers l'intérieur du corps 16.

Le stator 15 est muni de pieds de dent 25 du côté des extrémités libres des dents 20. Chaque pied de dent 25 s'étend circonférentiellement de part et d'autre d'une dent 20 correspondante. Chaque pied de dent 25 s'étend circonférentiellement selon un arc de cercle centré sur l'axe de rotation X.

Pour obtenir le bobinage 17, plusieurs phases sont formées par des bobines enroulées chacune autour d'une dent statorique 20. Chaque bobine est formée à partir à partir d'un fil électriquement conducteur recouvert d'une couche de matériau électriquement isolant tel que de l'émail. Un isolant de bobine pourra être intercalé entre chaque bobine et la dent 20 correspondante.

Par ailleurs, le rotor 11 comporte un corps 31 formé par un empilement axial de tôles planes afin de diminuer les courants de Foucault. Le corps 31 est réalisé en matière ferromagnétique. Le corps 31 peut être lié en rotation à l'arbre 12 de la machine électrique tournante de différentes manières, par exemple par emmanchement en force de l'arbre 12 cannelé à l'intérieur de l'ouverture centrale 32 du rotor réalisée dans l'âme 33.

Le rotor 11 comporte une pluralité de cavités 36 à l'intérieur desquels sont positionnés des aimants permanents 37 formant des pôles magnétiques 50. Une cavité 36 peut contenir un seul aimant 37 de forme parallélépipédique. En variante, une cavité 36 pourra contenir une pluralité d'aimants 37 empilés axialement ou radialement les uns par rapport aux autres. Les aimants 37 pourront présenter des angles biseautés.

Les aimants 37 sont de préférence réalisés en terre rare afin de maximiser la puissance de la machine 10. En variante, les aimants 37 peuvent être de nuance différente pour réduire les coûts. Par exemple, dans chaque cavité 36, on associe un aimant en terre rare et un aimant en ferrite moins puissant mais moins coûteux.

Le rotor 11 est à concentration de flux, c'est-à-dire que les faces latérales en vis-à-vis des aimants 37 situés dans deux cavités consécutives sont de même polarité.

Chaque cavité 36 traverse le corps 31 d'une face d'extrémité axiale à l'autre et est ouverte du côté de la périphérie externe du rotor 11. En variante, les cavités 36 pourront être borgnes.

En l'occurrence, chaque cavité 36 est délimité par deux dents rotoriques 40 adjacents du rotor 11. Les dents rotoriques 40 sont espacés angulairement entre eux de façon régulière. Les dents rotoriques 40 sont connectés par une de leurs extrémités à l'âme 33 munie de l'ouverture 32.

Afin d'assurer une retenue axiale des aimants 37, des flasques (non représentés) sont plaqués contre les extrémités axiales du corps de rotor 31. Ces flasques peuvent également avoir une fonction d'équilibrage du rotor 11.

Dans un exemple de réalisation particulier non représenté, il est possible de prévoir des laminettes rapportées montées chacune entre une lèvre 41 et une périphérie externe d'un aimant permanent 37 correspondant. Chaque laminette prend la forme d'une plaquette réalisée dans un matériau moins dur que le matériau des aimants 37. Il pourra par exemple s'agir de fibres de verre noyées dans une matière plastique pré-imprégnée. La laminette est plate rectangulaire et a sensiblement les mêmes dimensions et la même forme que la face circonférentielle externe de l'aimant 37 qu'elle recouvre avec ses bords en coïncidence. Dans un mode de réalisation différent, les dimensions peuvent être différentes. Une couche de colle plus souple que l'aimant 37 peut être interposée entre l'aimant 37 et la laminette.

Dans le cadre de la présente invention, chaque dent rotorique 40 comporte une unique lèvre 41. Dans les exemples considérés, la cavité 36 est partiellement fermé à la périphérie externe du rotor par une unique lèvre 41 de retenue radiale de l'aimant. Ainsi, toutes les lèvres 41 s'étendent circonférentiellement depuis la même face d'une dent rotorique 40 correspondant.

Dans les exemples considérés, une lèvre unique 41 s'étend depuis la face gauche de chaque dent rotorique 40. En variante non représentée, une lèvre unique 41 pourrait s'étendre depuis la face droite de chaque dent rotorique 40.

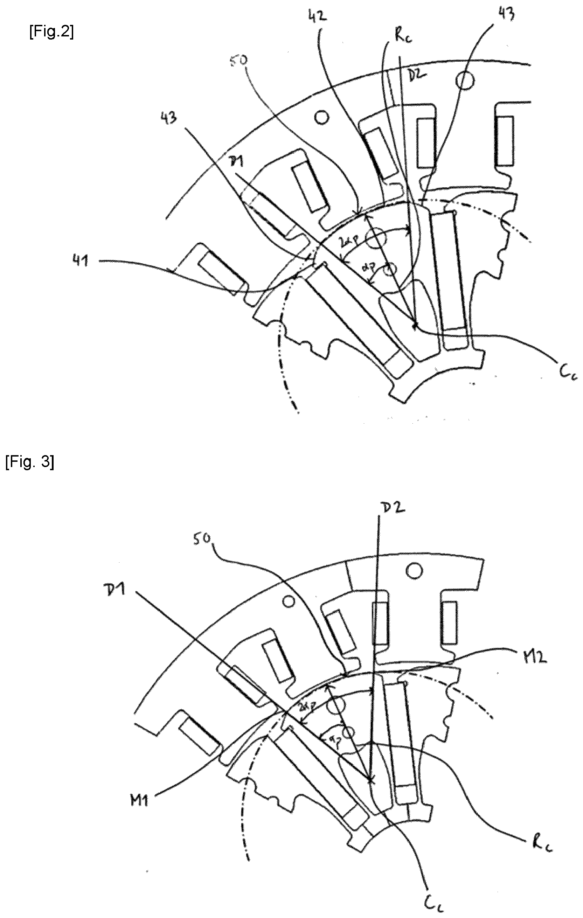

En référence aux figures 2 et 3, chaque pôle magnétique 50 présente une courbure en arc de cercle. L'arc de cercle correspond à la partie commune entre le pôle magnétique 50 et le cercle osculateur de ce même pôle 50 défini par un rayon de courbure Rc, un centre de courbure Cc et un angle polaire 2ap. L'arc de cercle est donc limité à ses deux extrémités circonférentielles par les points M1 et M2. Les points M1 et M2 étant les derniers points à la fois situés sur le cercle osculateur du pôle magnétique 50 et sur le pôle magnétique 50.

L'angle polaire 2ap est donc égale à l'angle entre deux droites D1 et D2 passant chacune par le centre de courbure Cc et une extrémité M1/M2.

Chaque dent rotorique 40 comporte une surface radialement externe 42, située en vis-à-vis de la périphérie interne du stator 15. La surface 42 est donc définie par ledit arc de cercle de centre Cc et deux extrémités 43. Dans les exemples considérés, une des deux extrémités 43 comprend la lèvre 41.

Selon un mode de réalisation préférée, les deux extrémités 43 d'une surface 42 présentent une courbure différente de la courbure de l'arc de cercle de centre Cc de cette même surface 42. Autrement dit, la surface radialement externe des extrémités 43 ne possède aucun point situé sur le cercle osculateur du pôle magnétique 50 et comprenant ledit arc de cercle délimité par les points M1 et M2. Cela permet d'obtenir une machine à entrefer variable.

Dans le rotor présenté à la figure 2 les deux extrémités 43 d'une même surface 42 sont asymétriques tandis que dans le rotor présenté à la figure 3, les deux extrémités 43 d'une même surface 42 sont symétriques. La symétrie correspond à un profil de surface extérieure symétrique par rapport à une droite médiane du pôle

Dans le cadre de la présente invention le rotor présente un ratio r entre le rayon de courbure Rc et le rayon rotorique Rr compris entre 0,5 et 0,7 et un ratio α entre le demi-angle polaire ap et le pas polaire τ compris entre 0,6 et 0,8.

Nous allons présenter ci-après comment ont été déterminer ces ratios. L'objectif est de rechercher par une démarche d'optimisation du rayon de courbure et du demi-angle polaire à minimiser le bruit mais tout en conservant les performances magnétiques exigées par les spécifications.

Une machine à aimant en I classique comprenant deux lèvres par pôle (également appelé bi-lip) avec aimants en néodyme de fer et de bore (Nd2Fe14B), 10 pôles, 15 encoches, bobinage concentré, hauteur package 217 mm et diamètre extérieur stator 93 mm a été utilisée en tant que machine de référence. Une combinaison optimale des performances a donc été obtenue sur cette machine s'agissant du couple et du bruit en recherchant la combinaison optimale du rayon de courbure Rc et du demi-angle polaire ap, valant respectivement 18mm et 22°. En les rapportant au rayon rotorique Rr et pas polaire τ, ces valeurs optimales deviennent r = 0,57 et α = 0,61.

La machine de référence a ensuite été modifiée selon une machine 1 (figure 2 - extrémités 43 asymétriques) et une machine 2 (figure 3 - extrémités 43 symétriques) afin de réduire les bruits d'origine électromagnétiques tout en offrant une performance optimale imposée par les spécifications, en particulier le taux de distorsion à harmonique (THD) de la force électromagnétique. La démarche adoptée consiste à trouver la combinaison optimale du rayon de courbure Rc rapporté au rayon rotorique Rr et du demi-angle polaire ap rapporté au pas polaire τ en faisant varier paramètres dans les plages admissibles.

Par une analyse en 2D puis des calculs en 3D, on fait varier les paramètres r et α afin de trouver un compromis optimal des grandeurs des machines susmentionnées. A partir des résultats indiquant le THD de la force électromagnétique (THD de la fem), et les harmoniques d'ordre 30 et 40 de la force subie par chaque dent statorique (force d'interaction entre le rotor et le stator qui sont à l'origine des bruits de la machine), il a été possible de déterminer quelles étaient les solutions qui parvenaient à respecter le THD requis tout en minimisant les harmoniques 30 et 40 (Fy 30, Fy 40) de la composante y de la force sur chaque dent statorique.

A partir de ces résultats il a été possible de déterminer les plages de valeurs optimales, à savoir un ratio r entre le rayon de courbure Rc et le rayon rotorique Rr compris entre 0,52 et 0,63 et un ratio α entre le demi-angle polaire ap et le pas polaire τ compris entre 0,62 et 0,80.

Les performances peuvent encore être améliorées lorsque le rotor présente un ratio entre le rayon de courbure Rc et le rayon rotorique compris entre 0,54 et 0,61 et un ratio α entre le demi-angle polaire et le pas polaire compris entre 0,64 et 0,78.

Nous allons maintenons présenter six modes de réalisations, à savoir la machine de référence (MAR), deux machines selon la présente invention (machine 1 - MA1 et la machine 2 - MA2), et trois machines comparatives (MAC1, MAC2 et MAC3). Ces machines sont présentées avec leurs caractéristiques dans le tableau 1 suivant. Les machines comparatives (MAC1, MAC2 et MAC3) sont des machines 1 dans lesquelles on a fait varier soit le ratio r, soit le ratio a, de telle sorte que l'un de ces ratios ne soit plus dans la plage de la présente invention.

**[Tableau 1]**

| Caractéristiques | MAR | MA1 | MA2 | MAC1 | MAC2 | MAC3 |
|---|---|---|---|---|---|---|
| Hauteur [p.u] | 1 | 1 | 1 | 1 | 1 | 1 |
| α_{P} [p.u] | 0,61 | 0,76 | 0,78 | 0,78 | 0,76 | 0,56 |
| r [p.u] | 0,58 | 0,58 | 0,58 | 0,51 | 0,64 | 0,58 |
| Entrefer minimal [p.u] | 1 | 1 | 1 | 1 | 1 | 1 |
| Épaisseur aimant [p.u] | 1 | 1 | 1 | 1 | 1 | 1 |

Les performances des six machines sont alors résumées dans le tableau 2 suivant.

**[Tableau 2]**

| Caractéristiques | SPEC | MAR | MA1 | MA2 | MAC1 | MAC2 | MAC3 |
|---|---|---|---|---|---|---|---|
| THD efm | < 8% | 6,64 | 7,92 | 6,57 | 8,17 | 7,36 | 5,98 |
| Fy30 [N] | A diminuer | 1 | 0,05 | 0,30 | 1,44 | 1,23 | 1,44 |
| Fy40 [N] | A diminuer | 1 | 0,69 | 1 | 0,41 | 1,28 | 1,31 |

Comparée à la machine initiale de référence, la machine 1 a permis de réduire les harmoniques 30 et 40 de la composante y de la force agissante sur chaque dent statorique tout en conservant un THD fem inférieure à la limite imposée . Ce qui permet encore de réduire à un certain niveau les bruits de la machine. La machine 2 a quant à elle réduit largement l'harmonique F₃₀ comparé à celle de la machine de référence. Son harmonique F₄₀ reste à un niveau équivalent de celui de la machine de référence, cette machine présente en conséquence moins de bruit que la machine de référence tout en ayant plus de couple.

En revanche, lorsque le ratio r est inférieur à 0,52, seule l'harmonique F₄₀ est diminuée, l'harmonique F₃₀ ayant augmentée et le THD dépassant le minimum requis (MAC1). Lorsque le ratio r est supérieur à 0,63 ou α inférieur à 0,62, le THD est bien sous la spécification mais il n'y aucune amélioration au niveau du bruit bien au contraire.

Bien entendu, la description qui précède a été donnée à titre d'exemple uniquement et ne limite pas le domaine de l'invention dont on ne sortirait pas en remplaçant les différents éléments par tout autres équivalents.

En outre, les différentes caractéristiques, variantes, et/ou formes de réalisation de la présente invention peuvent être associées les unes avec les autres selon diverses combinaisons, dans la mesure où elles ne sont pas incompatibles ou exclusives les unes des autres.

## Revendications

1. Rotor (11) de machine électrique, notamment pour véhicule automobile, ayant un axe de rotation (X), un rayon rotorique (Rᵣ), un pas polaire (τ) et comportant :
- un corps (31) comprenant une pluralité dents rotoriques (40) définissant des cavités (36) dans lesquelles sont logés des aimants permanents (37), chaque dent rotorique (40) comportant une unique lèvre (41) de retenue radiale d'un aimant permanent, et
- un ensemble de pôles magnétiques (50), chaque pôle présentant une courbure en arc de cercle, ledit arc de cercle étant défini par un rayon de courbure (R_{c}), un centre de courbure (C_{c}) et un angle polaire (2αₚ),
**caractérisé en ce qu'**il présente un ratio (r) entre le rayon de courbure (R_{c}) et le rayon rotorique (Rᵣ) compris entre 0,52 et 0,63 et un ratio (a) entre le demi-angle polaire (αₚ) et le pas polaire (τ) compris entre 0,62 et 0,80.

2. Rotor (11) selon la revendication 1 **caractérisé en ce que** ledit ratio (r) est compris entre 0,54 et 0,61 et ledit ratio (a) est compris entre 0,64 et 0,78.

3. Rotor (11) selon la revendication 1 ou 2, **caractérisé en ce que** chaque dent rotorique (40) comporte une surface radialement externe (42), ladite surface (42) étant définie par ledit arc de cercle de centre (C_{c}) et deux extrémités (43), une des deux extrémités (43) comprenant ladite lèvre (41).

4. Rotor (11) selon la revendication 3, **caractérisé en ce que** les deux extrémités (43) d'une surface (42) présentent une courbure différente de la courbure de l'arc de cercle de centre (C_{c}) de cette même surface (42).

5. Rotor (11) selon la revendication 4, **caractérisé en ce que** deux extrémités (43) d'une même surface (42) sont asymétriques.

6. Rotor (11) selon l'une quelconque des revendications précédentes, **caractérisé en ce qu'**il est de type à concentration de flux.

7. Rotor (11) selon l'une quelconque des revendications précédentes, **caractérisé en ce qu'**il comporte des laminettes rapportées montées chacune entre une lève (41) et une périphérie externe d'un aimant permanent (37) correspondant.

8. Rotor (11) selon l'une quelconque des revendications précédentes, **caractérisé en ce que** lesdits aimants permanents (37) sont réalisés en terre rare.

9. Rotor (11) selon l'une quelconque des revendications précédentes, **caractérisé en ce qu'**il comprend une âme (33) munie d'une ouverture centrale (32) pour le passage d'un arbre, lesdits dents rotoriques (40) étant connectées à ladite âme (33) par une de leurs extrémités.

10. Machine électrique tournante **caractérisé en ce qu'**elle comporte un rotor (11) tel que défini selon l'une quelconque des revendications précédentes.
